# DEMANDE DE BREVET EUROPEEN

(11) **EP 1 118 531 A1**
(43) Date de publication de la demande: **25.07.2001**
(21) Numéro de dépôt: 00810054.7
(22) Date de dépôt: 21.01.2000
(51) Int. Cl.: B62D 61/10

(54) **Véhicule pour terrain accidenté**

(71) Demandeur: ECOLE POLYTECHNIQUE FEDERALE DE LAUSANNE, 1015 Lausanne (CH)
(72) Inventeur: Crausaz, Yann, 1231 Conches (CH); Merminod, Baptiste, 1800 Vevey (CH); Wiesendanger, Markus, 1006 Lausanne (CH); Siegwart, Roland, 1024 Ecublens (CH); Lauria, Michel, 1008 Prilly (CH); Piguet, Ralph, 1315 La Sarraz (CH)
(74) Mandataire: Ganguillet, Cyril

(57) **Abrégé**

Le châssis rigide (1,2,4) comporte l'élément antérieur (20) qui forme l'élément arrière du quadrilatère articulé déformable (17,18,19,20). L'élément (17) est monté dans le prolongement de la fourche 15 reliée à la roue du train avant (7). Le train central comporte sur le côté droite les deux roues en tandem (9 et 10) dont les fourches sont articulées sur le système (24,26) pivotant sur les pivots (27) par rapport au montant (28) solidaire du châssis. Sur le côté gauche le train central est complété par une disposition symétrique. La roue arrière (14) est reliée au châssis par la fourche (30), le guidage (29) et la béquille (4).

## Description

L'objet de la présente invention appartient au domaine des véhicules pour terrain accidenté. Cette désignation englobe des groupes d'objets très divers comportant notamment le groupe des véhicules de chantier, celui des véhicules destinés à l'exploration spatiale, des véhicules utilisés en robotique, des jouets, des véhicules pour personnes handicapées. Dans toutes ces catégories de véhicules on rencontre le problème consistant à concevoir et réaliser un dispositif de locomotion s'adaptant aux accidents du terrain de manière à assurer la progression du véhicule tout en maintenant aussi stable que possible l'assiette du véhicule de façon à éviter notamment son renversement.

Le dispositif de locomotion peut comporter des jambes articulées avec des pieds reposant sur le sol, des organes de locomotion avec des surfaces planes ou incurvées se déplaçant par glissement continu ou intermittent, par exemple par reptation, des systèmes à chenilles, etc..

De manière générale le dispositif de locomotion doit pouvoir s'adapter le mieux possible aux accidents de terrain que le véhicule rencontre afin d'assurer le franchissement ou l'évitement des obstacles sans perturber exagérément l'assiette du châssis du véhicule. Il doit donc répondre à des moyens de commande. Ceux-ci peuvent fonctionner selon deux modes différents: moyens de commande actifs ou passifs. Les moyens de commande actifs comportent des capteurs capables de détecter en cours d'approche l'emplacement et la forme des obstacles et de manoeuvrer en conséquence le dispositif de locomotion. Les moyens de commande passifs sont au contraire intégrés au dispositif de locomotion de manière telle que celui-ci s'adapte spontanément aux obstacles, en réaction aux forces que ceux-ci exercent sur les parties du dispositif qui entrent en contact avec eux. Les moyens de commande passifs sont moins complexes et donc moins coûteux que les moyens actifs.

L'objet de la présente invention est un véhicule dont le dispositif de locomotion comporte des roues et sera désigné ci-après par les termes: dispositif de roulement. Il comporte des moyens de commande passifs.

On connaît déjà des véhicules dont le châssis est supporté par un dispositif de roulement, dans lesquels les moyens de commande sont de type passif, et qui sont capables de franchir des obstacles présentant des surfaces verticales, par exemple de gravir des marches, la ou les roues avant roulant contre la surface verticale de l'obstacle pendant que la ou les autres roues empêchent un recul du châssis. Les hauteurs de marche que ces dispositifs connus sont capables de franchir sont toutefois limitées alors que les besoins de la pratique demandent actuellement des véhicules capables de prestations améliorées à ce sujet.

Le but de la présente invention est de répondre à ce besoin.

Dans ce but la présente invention propose un véhicule pour terrain accidenté, comportant un châssis rigide supporté par un dispositif de roulement muni de roues et de moteurs et agencé de manière à présenter des moyens passifs intégrés au dispositif de roulement et assurant en réaction à des contacts d'au moins une partie des roues avec un accident de terrain un fonctionnement du dispositif de roulement qui facilite le franchissement ou l'évitement de l'accident de terrain, le dispositif de roulement comprenant un train avant avec au moins une roue, une fourche portant un axe de rotation de la dite roue et un système articulé déformable formé d'éléments rigides dont l'un est solidaire du châssis et un autre solidaire de la fourche en direction. D'autres caractéristiques de l'invention sont définies dans les revendications subordonnées à la revendication 1.

Une forme d'exécution et quelques variantes du véhicule selon l'invention sont décrites ci-après à titre d'exemples. On se réfère pour cela aux dessins annexés dont
la fig. 1 est une vue en élévation latérale d'une forme d'exécution du véhicule selon l'invention,
la fig. 2 en est une vue en plan de dessus du véhicule de la figure 1, et
les fig. 3a à 3d sont des vues schématiques du véhicule selon l'invention montrant le fonctionnement du dispositif de roulement lors du franchissement d'un obstacle.

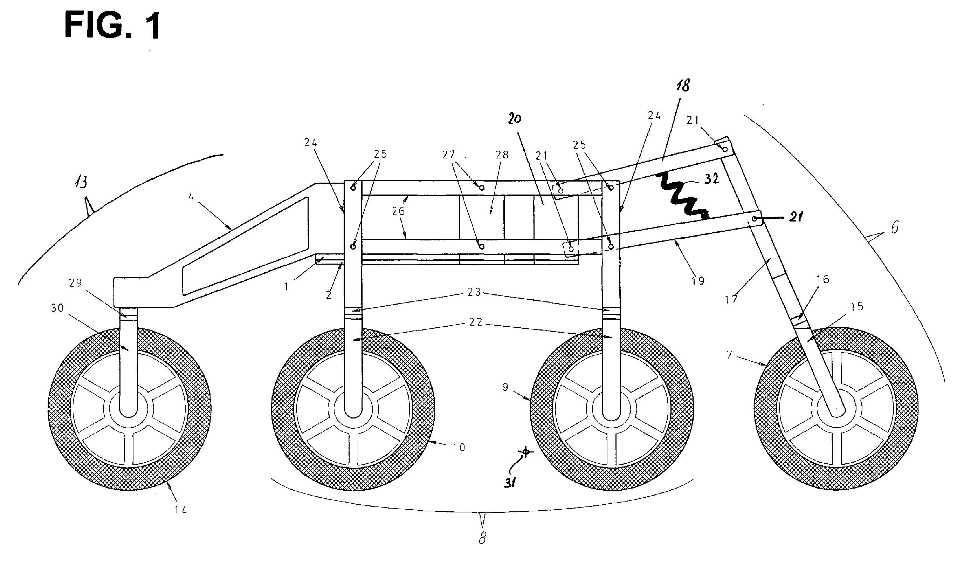

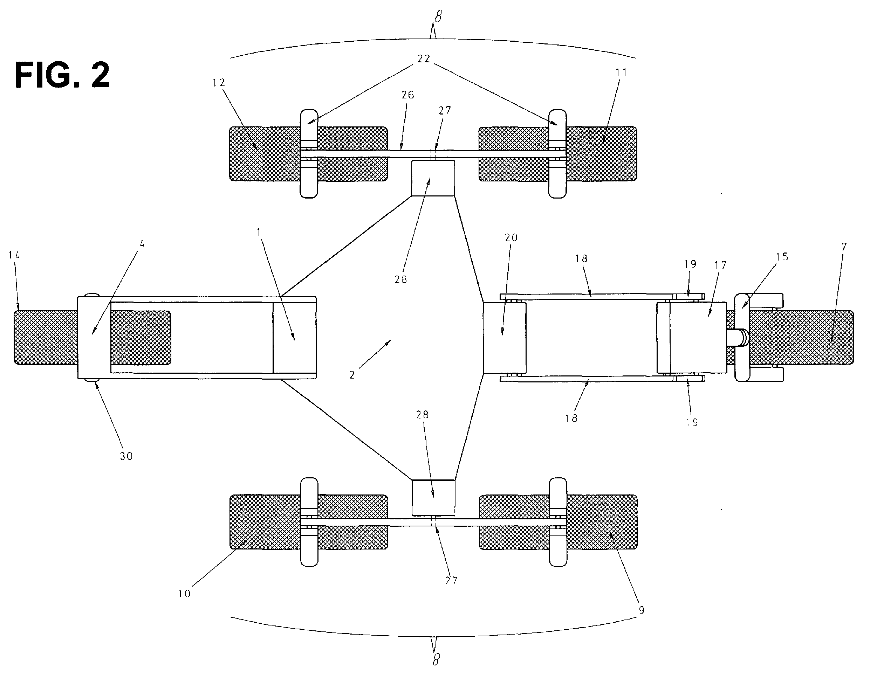

Le véhicule des fig. 1 et 2 est représenté de manière simplifiée et schématique. Il comporte un châssis 1 constitué essentiellement d'une plate-forme 2 en forme de losange et d'une béquille arrière 4 (fig. 2). Le dispositif de locomotion est du type à roulement. Il comporte un train de roulement avant 6 avec une roue 7, un train central 8 avec deux roues en tandem 9 et 10 sur le côté droit et deux roue en tandem 11 et 12 sur le côté gauche, et un train arrière 13 avec une roue 14 reliée à la béquille 4. Chaque roue est équipée d'un moteur (non représenté). Au moins pour les roues avant 7 et arrière 14, la liaison entre la roue et le châssis comporte comme on le verra encore plus loin un guidage rotatif permettant à la roue de tourner autour d'un axe perpendiculaire à son propre axe d'entraînement. Un moteur de direction commande cette rotation. La commande différentielle des moteurs de roulement du train central et celle des moteurs de direction des trains avant et arrière permet de diriger le véhicule et notamment de le faire tourner sur place avec un frottement minimum. Les commandes des moteurs sont concentrées sur un organe de commande central. Les types des différents moteurs de roulement et de direction ne sont pas des éléments critiques de la présente description. Leur détermination est laissée à la compétence de l'homme du métier.

Le train de roulement avant 6 est considéré comme un élément essentiel du véhicule décrit. La roue 7 est montée de façon à pouvoir pivoter dans une fourche 15 dont la partie supérieure tourne dans un guidage 16 solidaire d'une barre rectiligne 17. Le moteur de direction (non représenté) de la roue 7 est monté entre le pivot supérieur de la fourche 15 et son guidage 16 tandis que le moteur d'entraînement de cette même roue est monté sur la fourche 15.

La barre 17 constitue l'élément antérieur d'un système articulé en forme de quadrilatère complété par deux paires de barres longitudinales parallèles 18 et 19 et un socle 20 solidaire de la plate-forme 2. Quatre pivots 21 disposés parallèlement les uns aux autres aux quatre sommets du quadrilatère relient deux à deux les paires de barres 18 et 19 avec les éléments antérieur 17 et postérieur 20 du système articulé. Dans une forme d'exécution particulière, le système articulé 17, 18, 19, 20 peut avoir la forme d'un trapèze, voire d'un parallélogramme. Le choix de la forme définitive du système dépend des performances à atteindre comme on le verra plus loin.

Le train de roulement central 8 supporte, avec le train arrière 4 l'ensemble du poids du châssis et de la charge utile montée sur la plate-forme 2. Une particularité importante du véhicule est que chacune des deux paires de roues en tandem 9, 10 d'un côté et 11, 12 de l'autre est reliée au châssis de manière que les deux roues de la paire s'adaptent automatiquement aux irrégularités du terrain en maintenant une des extrémités latérales de la plate-forme 2 du châssis à une hauteur correspondant à la moyenne des hauteurs des points de contact entre le terrain et les roues.

L'axe de chacune des roues 9, 10, 11, 12 pivote à ses extrémités dans les branches d'une fourche 22 dont l'extrémité supérieure forme un pivot engagé dans un guidage 23 solidaire de l'extrémité inférieure d'une barre rigide 24. Les barres 24 de chaque tandem sont articulées par des pivots 25 aux extrémités de deux barres parallèles 26 de manière à former deux parallélogrammes déformables. Les points centraux des deux barres longitudinales 26 de chaque parallélogramme pivotent en 27 sur des montants rigides 28 situés verticalement aux extrémités latérales de la plate-forme 2. Les pivots 27 entre les barres 26 et le montant 28 sont décalés verticalement l'un par rapport à l'autre lorsque l'assiette du châssis est normale. Il en est de même des positions relatives des pivots 25 associés à chaque roue 9, 10, 11 et 12. Cette disposition a pour conséquence que le poids du véhicule est normalement supporté par les cinq roues des trains central et arrière, un report de poids se produisant toutefois au cours du franchissement d'un obstacle comme on le verra plus loin.

Le train de roulement central 8 représenté à la figure 1 présente une symétrie par rapport à l'axe constitué par les deux pivots 27 disposés à la verticale l'un de l'autre. Cette configuration permet au train de roulement de fonctionner de façon identique en marche avant ou arrière du véhicule. Bien entendu, les deux pivots 27 peuvent également être disposés différemment l'un par rapport à l'autre. En particulier, selon une variante d'exécution, non représentée sur les dessins, le pivot supérieur peut être décalé vers l'arrière et le pivot inférieur décalé vers l'avant de façon que l'axe qu'il constituent soit incliné vers l'arrière d'un angle de par exemple 15°. Dans une telle configuration, le centre de rotation virtuel des roues du train de roulement central 8 se trouve alors situé en dessous du niveau de l'axe des roues. Cette configuration permet de faciliter la montée de la roue 9 lors du franchissement d'un obstacle. De nombreuses autres variantes sont bien entendu réalisables.

La béquille 4 rigidement fixée à l'arrière de la poutre 2 porte un guidage 29 dans lequel est engagé un pivot vertical solidaire d'une fourche 30 assurant la rotation de la roue 14.

Les roues 7 et 9, 10, 11, 12 du train avant et du train central, de même que la roue 14 sont équipées d'un moteur d'entraînement et d'un moteur de direction capable de faire tourner la fourche de la roue par rapport à son guidage. Celui-ci maintient l'axe de la fourche dans la direction voulue par rapport au châssis. Toutefois comme on l'a déjà relevé, des guidages directionnels et des moteurs de direction ne sont pas nécessaires dans tous les cas pour les roues du train central. Ils contribuent cependant à éviter des phénomènes d'usure par frottement.

Sur terrain plat les fourches 30 et 22 du véhicule de la fig. 1 sont en position verticale tandis que la fourche 15 et la barre 17 sont obliques. Le véhicule peut être dirigé à volonté en commandant les moteurs de direction et les moteurs d'entraînement des roues.

Les systèmes articulés 24, 26 du train central facilitent le franchissement des accidents de terrain qui se présentent sur le chemin des roues latérales 9, 10 ou 11, 12, que ces accidents soient des dépressions ou des bosses.

Le train avant 6 joue un rôle important qui va être expliqué ci-après, dans le cas où un obstacle présentant une face frontale verticale ou presque verticale, se présente dans le chemin du véhicule, sur son axe longitudinal.

On se rend compte, en observant la fig. 1, que si la roue 7 rencontre une paroi verticale alors que le train arrière et le train central sont entraînés vers la droite sur le dessin, le roulement du bandage de la roue 7 contre cette paroi verticale provoquera une déformation du système articulé de telle sorte que l'axe de la roue se déplacera vers le haut sous l'effet du couple produit sur le système quadrilatère par la réaction de l'obstacle sur la roue avant lors de l'avancement du véhicule, les autres roues, motorisées, empêchant un recul du châssis.

Le seul effort à fournir consiste à soulever le train avant. Compte tenu de la configuration de la fourche avant, la charge utile et le poids du châssis n'interviennent pas à ce stade du déplacement. Comme on le voit sur la fig. 1, le système articulé en forme de quadrilatère est lié rigidement au châssis par les deux pivots 21 situés à gauche sur la figure. Les deux pivots 21 opposés, ainsi que les éléments 17, 18 et 19 qui les relient étant libres, ces éléments sont donc susceptibles de se déplacer par rapport au châssis, la trajectoire de leur déplacement (qui n'est pas un cercle lorsque le quadrilatère est quelconque) étant déterminée par l'arrangement desdits éléments. Un changement dans la longueur desdits éléments implique bien entendu un changement de ladite trajectoire. En observant la trajectoire du centre de la roue avant par rapport au châssis, on peut trouver le centre de rotation virtuel et instantané 31 de l'axe de la roue pour chaque position de la trajectoire de la roue. Du fait de la configuration de la fourche avant, ce centre de rotation virtuel et instantané se situe en-dessous du niveau du centre de la roue elle-même, ce qui permet de bénéficier du couple que subit le train avant pour aider la roue avant à monter.

A la fig. 1 on a représenté schématiquement un ressort 32 disposé dans le système articulé du train avant. Ce ressort tend à s'opposer à la déformation du système articulé, de sorte qu'en présence de ce ressort le système accumule de l'énergie pendant que la roue 7 gravit la face verticale de l'obstacle. La disposition de ce ressort et sa forme sont optionnelles. L'optimisation des données constructives pour l'établissement du train avant tel que décrit peut se faire par le calcul en fonction des performances recherchées.

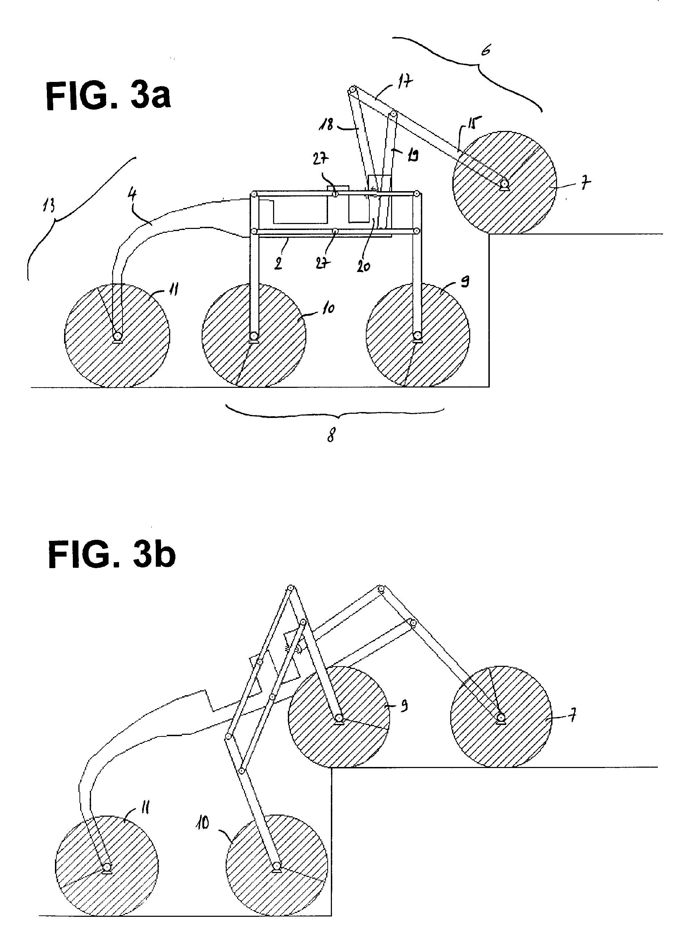

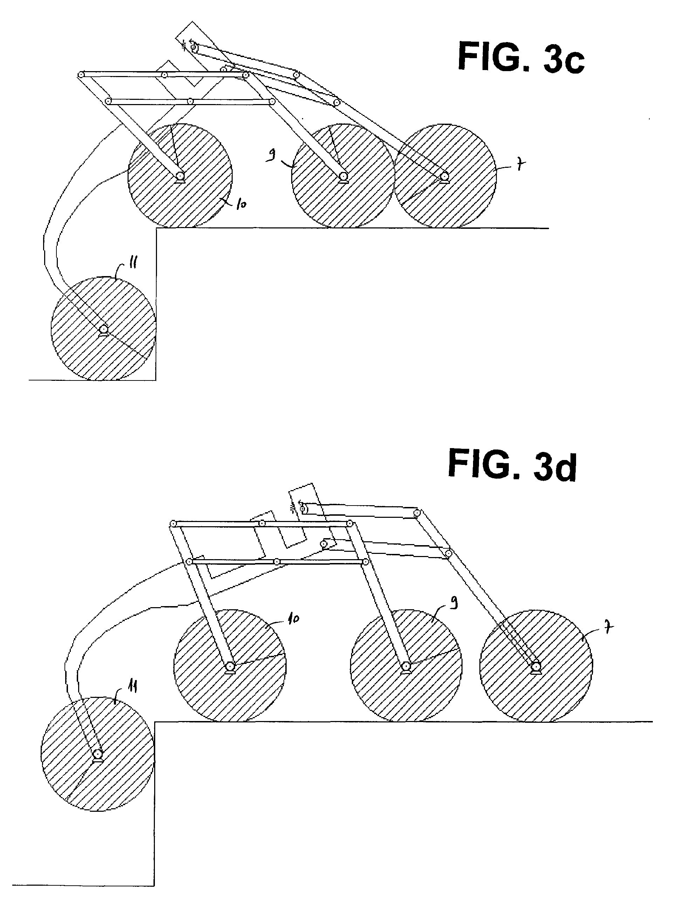

Les fig. 3a à 3d montrent schématiquement la disposition du châssis et des trains de roulement à diverses étapes du franchissement d'un obstacle tel qu'une marche d'escalier. On reconnaît sur ces figures les éléments que l'on a déjà décrit en regard de la fig. 1: le châssis 1, 2, 4, les trains arrière 13 et central 8 ainsi que le train avant 6 avec la roue 7, sa fourche 15 orientée obliquement et le système articulé 17, 18, 19 et 20. Lorsque la roue 7 est parvenue sur la surface supérieure plane de la marche (fig. 3a) la force du ressort 32 (non représenté sur les fig. 3a à 3d afin de ne pas surcharger le dessin) ou simplement l'effort de traction développé par le moteur avant combiné avec le poids du train avant tendent à exercer sur le châssis une force ayant une composante verticale qui reporte partiellement le poids du châssis sur le train arrière. Les roues 9 et 11 gravissent alors la face verticale de la marche en plaçant les systèmes articulés 24, 26 dans la position visible à la fig. 3b, c'est-à-dire en leur imprimant une rotation dans le sens sinistrogyre.

Ensuite les roues 10 et 12 gravissent la marche (fig. 3c) pendant que les systèmes articulés 24, 26 pivotent dans le sens dextrogyre par rapport au châssis et que les articulations 27 et donc la partie centrale du châssis sont soulevées (fig. 3d). Finalement l'ensemble du véhicule reprend la position de la fig. 1. Des mesures effectuées sur des prototypes ont montré qu'au cours de ces étapes le centre de gravité du châssis décrit un mouvement ascendant progressif selon une courbe continue qui présente des paliers successifs et dont le tracé dépend des caractéristiques constructives du châssis et du dispositif de roulement.

Lors d'un déplacement dans la direction de la descente, les éléments décrits fonctionnent en sens inverse de ce qui vient d'être montré. Lorsque la roue avant 7 a parcouru la hauteur de la marche de haut en bas, le poids du train avant tend à faire tourner les parallélogrammes 24, 26 en les écartant de la position médiane jusqu'au moment où les roues 9 et 11 abordent la face descendante de la marche.

On a constaté que, grâce à la disposition décrite, des hauteurs de marche supérieures à une fois et demie le diamètre des roues pouvaient être franchies. Cet avantage est obtenu en partie grâce au fait que dans le train avant le point de rotation virtuel instantané 31 de l'axe de la roue 7 est situé très bas. D'autre part la disposition comportant un train central avec deux paires de roues en tandem montées sur des systèmes articulés en parallélogrammes permettent de contribuer à limiter l'inclinaison longitudinale du châssis pendant le franchissement de l'obstacle. Le point de rotation virtuel des roues de ce train se trouve au niveau de l'axe des roues tout en permettant une garde au sol relativement élevée. Cette disposition est avantageuse. Dans d'autres formes d'exécution la garde au sol, c'est-à-dire la distance entre la plate-forme 2 ou ce qui en tient lieu, et le sol pourrait être inférieure à ce qui est représenté au dessin.

Comme les tandems droite et gauche du train central sont indépendants l'un de l'autre, le véhicule franchit facilement des obstacles tels que des marches, même dans le cas ou l'approche se fait selon un axe oblique. Ce fait a également été dûment constaté lors des essais sur prototypes.

Les avantages de l'invention peuvent aussi être obtenus, au moins en partie, dans le cas où le train central 8 est réduit à deux roues seulement, toutefois des exécutions avec dédoublement du train avant et/ou du train arrière, ainsi qu'avec un train central comprenant plus de quatre roues peuvent aussi être envisagées. D'autre part, de façon à permettre un réglage de l'assiette du châssis, notamment lorsque le véhicule est à l'arrêt, la liaison entre le châssis et les trains de roulement pourrait être équipée de moyens d'équilibrage auxiliaires de type hydraulique pneumatique ou élastique comme par exemple des vérins.

## Revendications

1. Véhicule pour terrain accidenté, comportant un châssis rigide (1) supporté par un dispositif de roulement (6,8,13) muni de roues et de moteurs et agencé de manière à présenter des moyens passifs intégrés au dispositif de roulement et assurant en réaction à des contacts d'au moins une partie des roues avec un accident de terrain un fonctionnement du dispositif de roulement qui facilite le franchissement ou l'évitement de l'accident de terrain, caractérisé en ce que le dispositif de roulement comprend un train avant (6) avec au moins une roue (7), une fourche (15) portant un axe de rotation de la dite roue et un système articulé déformable (17,18,19,20) formé d'éléments rigides dont l'un (20) est solidaire du châssis et un autre (17) solidaire de la fourche en direction.

2. Véhicule selon la revendication 1, caractérisé en ce que le dit système articulé présente la forme d'un quadrilatère.

3. Véhicule selon la revendication 1, caractérisé en ce que les éléments (17,18,19,20) du système articulé déformable du train avant sont reliés deux à deux au moyen de pivots (21) ayant leur axe parallèle à celui de la roue.

4. Véhicule selon la revendication 3, caractérisé en ce que le train avant (6) comprend plusieurs roues reliées chacune au châssis par un système articulé déformable, les axes de ces roues étant parallèles.

5. Véhicule selon la revendication 1 ou la revendication 4, caractérisé en ce que chaque système articulé du train avant est équipé d'un moyen récepteur d'énergie tel qu'un ressort (32) capable de se charger d'énergie lors d'une déformation du système et de restituer la dite énergie lorsque le système revient à sa forme de repos.

6. Véhicule selon la revendication 1, caractérisé en ce que le dispositif de roulement comprend un train central (8) avec au moins une paire de roues (9,10; 11,12) disposées des deux côtés du châssis, capables de supporter au moins en partie le poids du châssis et celui de la charge utile du véhicule.

7. Véhicule selon la revendication 6, caractérisé en ce que le train central (8) comprend de chaque côté du châssis une paire de roues en tandem (9,10;11,12), pourvues de fourches (22) dont les extrémités supérieures constituent des éléments extrêmes (24) d'un système articulé en forme de parallélogramme (24,26), ces deux systèmes étant montés pivotant sur des montants (28) solidaires du châssis aux deux extrémités latérales d'une plate-forme (2) constituant une partie du châssis (1).

8. Véhicule selon la revendication 1, caractérisé en ce que les trains de roulement sont agencés de manière que le véhicule puisse gravir une paroi verticale d'une hauteur comprise entre une fois et demie et deux fois le diamètre des roues.

9. Véhicule selon l'une quelconque des revendications précédentes, dont le dispositif de roulement comporte plusieurs trains de roulement indépendants (6,8,13), caractérisé en ce qu'au moins une partie des trains de roulement est équipée de moyens hydrauliques, pneumatiques ou élastiques auxiliaires destinés au réglage de l'assiette du châssis.
